# EUROPEAN PATENT APPLICATION

(11) **EP 4 513 889 A1**
(43) Date of publication of application: **26.02.2025**
(21) Application number: 22961663.6
(22) Date of filing: 11.10.2022
(51) Int. Cl.: H04R 1/10

(54) **HEADPHONES**

(71) Applicant: Shenzhen Shokz Co., Ltd., Shenzhen, Guangdong 518108 (CN)
(72) Inventor: DENG, Wenjun, Shenzhen, Guangdong 518108 (CN); YUAN, Yongshuai, Shenzhen, Guangdong 518108 (CN); HUANG, Yujia, Shenzhen, Guangdong 518108 (CN); ZHOU, Wenbing, Shenzhen, Guangdong 518108 (CN); LIAO, Fengyun, Shenzhen, Guangdong 518108 (CN); QI, Xin, Shenzhen, Guangdong 518108 (CN)
(74) Representative: Wang, Bo
(86) International application number: PCT/CN2022/124541
(87) International publication number: WO 2024/077468

(57) **Abstract**

Disclosed is an earphone including: two speaker assemblies, a connection member, and a processing circuit. The connection member is configured to connect the two speaker assemblies, and the connection member provides, through a bending deformation, a clamping force for placing the two speaker assemblies on a head of a user, and the connection member includes a housing with an accommodation cavity. A bending sensor is disposed in the accommodating cavity, and the bending sensor is configured to generate a bending signal based on a bending state of the connection member. The processing circuit is configured to determine a placement state of the earphone based on the bending signal. The placement state includes one of a normal wearing state, an abnormal wearing state, or a free placement state.

## Description

### TECHNICAL FIELD

This application relates to the field of acoustic technology, and in particular, to an earphone.

### BACKGROUND

In the current earphone market, sensors are widely used in wearing detection of products such as earphones. When the sensor identifies that a user is wearing the earphone, a system can be automatically awakened. When the sensor identifies that the user takes off the earphone, the earphone can automatically enter into a standby mode, thus realizing a purpose of reducing power consumption and prolonging the service time, while saving operation steps of the user, and greatly improving the user experience.

Currently, the existing sensors for the wearing detection mainly include infrared sensors and capacitive contact sensors. The former has a complex structure and system, and the latter has a low stability, and both of them have the problem of insufficient identification accuracy. In a bone conduction earphone, due to its unique wearing style, the traditional wearing detection sensors cannot achieve an ideal detection effect. Therefore, there is a need to develop a novel wearing detection scheme to accurately identify the wearing state of the earphone.

### SUMMARY

Embodiments of the present disclosure provide an earphone including: two speaker assemblies, a connection member, and a processing circuit. The connection member is configured to connect the two speaker assemblies. The connection member provides, through a bending deformation, a clamping force for placing the two speaker assemblies on a head of a user. The connection member includes a housing with an accommodation cavity. A bending sensor is disposed in the accommodation cavity, and the bending sensor is configured to generate a bending signal based on a bending state of the connection member. The processing circuit is configured to determine a placement state of the earphone based on the bending signal. The placement state includes one of a normal wearing state, an abnormal wearing state, or a free placement state.

In some embodiments, the connection member includes two ear hook assemblies and a rear hanging assembly. The two speaker assemblies are connected to the rear hanging assembly through the two ear hook assemblies, respectively, and the bending sensor is disposed in the accommodation cavity formed by the rear hanging assembly.

In some embodiments, a sensitivity direction of the bending sensor is the same as a bending direction of the rear hanging assembly.

In some embodiments, bending sensor is disposed at a position where a symmetrical surface of the rear hanging assembly intersects the rear hanging assembly.

In some embodiments, the housing is made of a rigid material, and the bending sensor is adhered to an inner wall of the accommodation cavity.

In some embodiments, the rear hanging assembly further includes a skeleton structure. The bending sensor is fitted to the skeleton structure, and a stiffness of the skeleton structure is greater than a stiffness of the bending sensor in the bending direction of the rear hanging assembly.

In some embodiments, when the bending signal indicates that the equivalent curvature radius of the rear hanging assembly is greater than an equivalent curvature radius of the earphone when the earphone is freely placed and is less than a preset threshold, the processing circuit determines that the earphone is in the abnormal wearing state. In some embodiments, when the bending signal indicates that the equivalent curvature radius of the rear hanging assembly is greater than the equivalent curvature radius of the earphone when the earphone is freely placed and is greater than the preset threshold, the processing circuit determines that the earphone is in the normal wearing state.

In some embodiments, at least one of the two ear hook assemblies includes an earphone compartment, and the earphone further includes: a contact sensor disposed within the earphone compartment and configured to identify whether the earphone compartment is in contact with the user.

In some embodiments, the processing circuit is further configured to determine the placement state of the earphone based on the bending signal of the bending sensor and a contact signal of the contact sensor.

In some embodiments, the earphone includes one or more electronic assemblies. The processing circuit is further configured to adjust an operating state of the one or more electronic assemblies according to the placement state of the earphone, including: controlling the one or more electronic assemblies to be in an awake state when the earphone is in the normal wearing state; and controlling the one or more electronic assemblies to be in a low-power operating state when the earphone is in the abnormal wearing state or in the free placement state.

In some embodiments, when the bending signal is a first bending signal and the contact signal is a first contact signal, the processing circuit determines that the earphone is in the normal wearing state. The first bending signal indicates that the equivalent curvature radius of the rear hanging assembly is greater than the equivalent curvature radius of the earphone when it is freely placed and is greater than or equal to a preset threshold. The first contact signal indicates that the earphone compartment is not in contact with the user.

In some embodiments, when the bending signal is a first bending signal and the contact signal is a second contact signal, the processing circuit determines that the earphone is in the abnormal wearing state. The first bending signal indicates that an equivalent curvature radius of the connection member is greater than a preset threshold, the preset threshold being greater than an equivalent curvature radius of the earphone when the earphone is freely placed, and the second contact signal indicates that the earphone compartment is in contact with the user.

In some embodiments, the earphone further includes a contact sensor disposed within a housing of at least one speaker assembly of the two speaker assemblies and configured to identify whether the at least one speaker assembly is in contact with the user.

In some embodiments, when the bending signal is a first bending signal and the contact signal is a second contact signal, the processing circuit determines that the earphone is in the normal wearing state. The first bending signal indicates that the equivalent curvature radius is greater than an equivalent curvature radius of the earphone when the earphone is freely placed and is greater than or equal to a preset threshold. The second contact signal indicates that the speaker assembly is in contact with the user.

In some embodiments, when the bending signal is a first bending signal and the contact signal is a first contact signal, the processing circuit determines that the earphone is in the abnomal wearing state. The first bending signal indicates that the an equivalent curvature radius of the connection member is greater than the equivalent curvature radius of the earphone when it is freely placed and is greater than or equal to a preset threshold, and the first contact signal indicates that the speaker assembly is not in contact with the user.

In some embodiments, the contact sensor includes at least one of a capacitive proximity sensor, a film pressure sensor, and an infrared sensor.

Additional features are set forth in part in the following descriptions and become apparent to those skilled in the art by reference to the following and the accompanying drawings, or may be understood by the production or operation of embodiments. Features of the present disclosure are realized and obtained by practicing or using aspects of the methods, tools, and combinations set forth in the following detailed examples.

### BRIEF DESCRIPTION OF THE DRAWINGS

The present disclosure will be further illustrated by way of exemplary embodiments, which will be described in detail by means of the accompanying drawings. These embodiments are not limiting, and in these embodiments, the same numbering denotes the same structure, wherein
FIG. 1 is a schematic diagram illustrating an exemplary structure of an earphone according to some embodiments of the present disclosure;
FIG. 2 is a schematic diagram illustrating a circuit module of an exemplary earphone according to some embodiments of the present disclosure;
FIG. 3 is a schematic diagram illustrating a structure of an exemplary earphone according to some other embodiments of the present disclosure;
FIG. 4 is a schematic diagram illustrating a structure of a cross-section of a connection member of an exemplary earphone according to some embodiments of the present disclosure;
FIG. 5A is a schematic diagram illustrating a structure of a cross-section of a connection member of an exemplary earphone according to other embodiments of the present disclosure;
FIG. 5B is a schematic diagram illustrating a structure of a cross-section of a connection member of an exemplary earphone according to another embodiment of the present disclosure;
FIG. 6A is a schematic diagram illustrating an exemplary earphone in a free placement state according to some embodiments of the present disclosure;
FIG. 6B is a schematic diagram illustrating an exemplary earphone in a normal wearing state according to some embodiments of the present disclosure;
FIG. 7 is a schematic diagram illustrating a circuit module of an exemplary earphone according to other embodiments of the present disclosure;
FIG. 8A is a schematic diagram illustrating an exemplary earphone in a free placement state according to some embodiments of the present disclosure;
FIG. 8B is a schematic diagram illustrating an exemplary earphone in a normal wearing state according to some embodiments of the present disclosure;
FIG. 8C is a schematic diagram illustrating an exemplary earphone in an abnormal wearing state according to some embodiments of the present disclosure;
FIG. 9A is a schematic diagram illustrating an exemplary earphone in a free placement state according to some embodiments of the present disclosure;
FIG. 9B is a schematic diagram illustrating an exemplary earphone in a normal wearing state according to some embodiments of the present disclosure; and
FIG. 9C is a schematic diagram illustrating an exemplary earphone in an abnormal wearing state according to some embodiments of the present disclosure.

### DETAILED DESCRIPTION

To more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and it is possible for those skilled in the art to apply the present disclosure to other similar scenarios in accordance with these drawings without creative labor. It should be understood that these exemplary embodiments are given only to enable those skilled in the art to better understand and thus implement the present disclosure, and are not intended to limit the scope of the present disclosure in any way. Unless obviously obtained from the context or the context illustrates otherwise, the same numeral in the drawings refers to the same structure or operation.

As shown in the specification and the claims, unless the context clearly suggests an exception, the words "one," "a ", "an," "a kind," and/or "the" do not refer specifically to the singular, but also include the plural. In general, the terms "comprise," "comprises," and/or "comprising," "include," "includes," and/or "including," merely prompt to include operations and elements that have been clearly identified, and these operations and elements do not constitute an exclusive listing. The methods or devices also include other operations or elements. The term "based on" refers to "based at least in part on." The term "one embodiment" means "at least one embodiment"; the term "another embodiment" means "at least one other embodiment."

In the description of the present disclosure, it is to be understood that the terms "front," "rear," "ear hook," "rear hanging," etc., indicate an orientation or positional relationship based only on that shown in the accompanying drawings, which are used only for the purpose of facilitating the description of the present disclosure and simplifying the description, and are not intended to indicate or imply that the device or element referred to must have a particular orientation, be constructed and operated in a particular orientation, or be operated in a particular manner. Therefore these terms are not to be construed as a limitation of the present disclosure.

Additionally, the terms "first" and "second" are used only for descriptive purposes and are not to be understood as indicating or implying relative importance or implicitly specifying the number of technical features indicated. Thus, a feature defined with "first," "second" expressly or implicitly includes at least one such feature. In the description of the present disclosure, "plurality" means at least two, e.g., two, three, etc., unless explicitly and specifically limited otherwise.

In the present disclosure, unless otherwise expressly specified or limited, the terms "mounted," "connected," "connection," "fixed" and other terms should be understood in a broad sense, for example, it may be a fixed connection, a removable connection, or an integrated connection; it may be a mechanical connection or an electrical connection; it may be a direct connection or an indirect connection through an intermediate medium; it may be a connection within two components or an interactive relationship between the two elements. For those skilled in the art, the specific meanings of the above terms in the present disclosure are understood based on specific situations.

Embodiments of the present disclosure provide an earphone (which is also referred to as an acoustic output device). The earphone analyzes a current placement state (e.g., a normal wearing state, an abnormal wearing state, or a free placement state) of the earphone by detecting a bending state of a connection member between the speaker assemblies, thereby further adjusting one or more electronic assemblies (e.g., a Bluetooth module, a battery, etc.) based on the current placement state of the earphone. In some embodiments, a plurality of sensors (e.g., the same or different types of sensors) are collaborated to detect the current placement state of the acoustic output device (e.g., the earphone, smart glasses, etc.), thereby improving an accuracy of wearing detection of the acoustic output device. The earphone provided by the embodiments of the present disclosure is described in detail below in connection with the accompanying drawings.

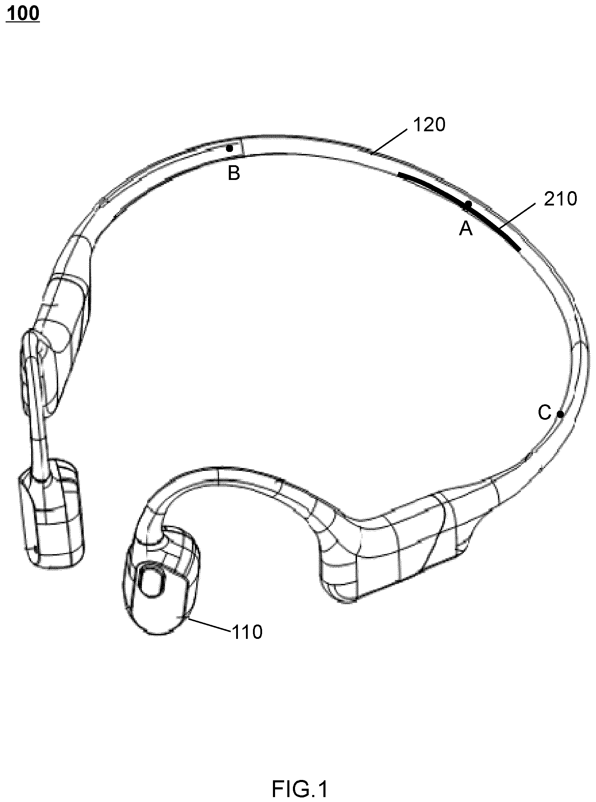

FIG. 1 is a schematic diagram illustrating an exemplary structure of an earphone according to some embodiments of the present disclosure. In some embodiments, an earphone 100 is a bone conduction earphone, an air conduction earphone, or a bone and air conduction earphone. In some embodiments, the earphone 100 is an open earphone. In some embodiments of the present disclosure, the bone conduction earphone is taken as an example for illustration, which does not limit the scope of the present disclosure. Referring to FIG. 1 , the earphone 100 includes two speaker assemblies 110, a connection member 120, and a bending sensor 210.

The two speaker assemblies 110 are configured to convert audio signals (i.e., electrical signals) into mechanical vibration signals (i.e., acoustic signals), thereby outputting sound to a user. In some embodiments, there are various types of speaker assemblies 110, e.g., electromagnetic speaker assemblies (e.g., moving coil type, moving iron type, etc.), piezoelectric speaker assemblies, inverse piezoelectric speaker assemblies, electrostatic speaker assemblies, etc., which are not limited in the present disclosure.

The connection member 120 is configured to connect the two speaker assemblies 110. The connection member 120 serves as a fixing device to enable the earphone 100 to keep fixed relative to the user. Specifically, the connection member 120 has a certain ability to deform and recover, which provides a clamping force that places the two speaker assemblies 110 to a user's head or neck through a bending deformation. In some embodiments, the connection member 120 includes a head-mounted connection member or a rear-mounted connection member. Exemplarily, when the connection member 120 is the head-mounted connection member, the user places the connection member 120 on a top of the head, thereby fixing the earphone 100 relative to the user. When the connection member 120 is the rear-mounted connection member, the user places the connection member 120 behind the user's head or behind the user's neck, thereby causing the earphone 100 to be fixed relative to the user. For example, when the user is wearing the earphone 100 normally, the connection member 120 is placed behind the user's head, and when the user is not using the earphone 100 (i.e., the earphone 100 is in an abnormal wearing state), the user hangs the earphone 100 around the neck, at which time the connection member 120 is placed behind the user's neck. In some embodiments, a connection between the connection member 120 and the two speaker assemblies 110 include an injection-molded connection, a weld, a riveted connection, a bolt, a bonded connection, a snap-on connection, etc., or any combination thereof.

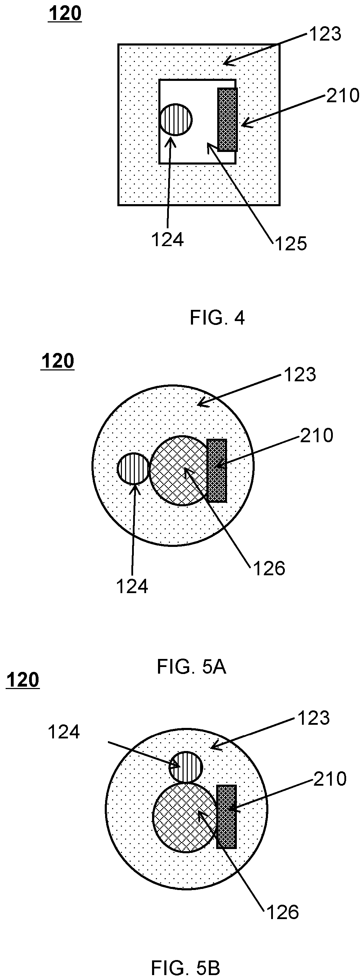

In some embodiments, the connection member 120 includes a housing with an accommodation cavity configured to accommodate one or more components of the earphone 100, for example, a communication cable for transmitting signals for the two speaker assemblies 110, a bending sensor 210, etc. More descriptions of the accommodation cavity may be found in FIG. 4 and FIGs. 5A-5B and the related descriptions of the present disclosure.

The bending sensor 210 is configured to identify a bending state of the connection member 120. It is appreciated that the bending state of the connection member 120 causes a change in a particular parameter in the bending sensor 210. Different types of the bending sensors 210 are working based on different principles of operation, and their corresponding specific parameters are different. Merely by way of example, in some embodiments, the bending sensor 210 has a cavity, and the deformation of the connection member 120 can cause a change in a volume of the cavity and an air pressure within the cavity, thereby generating a corresponding signal to indicate the bending state. In some embodiments, the bending sensor 210 has a capacitive structure, and the deformation of the connection member 120 can cause a change in a capacitance of the capacitive structure. In some embodiments, the bending sensor 210 has a resistor whose resistance changes with a change of the bending state, so that the bending state of the bending sensor 210 can be determined based on the change of the resistance of the resistor. In some embodiments, the bending sensor 210 is in a form of an elongated strip or film. In some embodiments, a length of the bending sensor 210 is in a range of 0.1 cm-2 cm, e.g., the length is 0.5 cm, 0.8 cm, 1 cm, etc. In some embodiments, the bending sensor 210 includes a flexible printed circuit (FPC), whose surface includes a printed sensitive material. The sensitive material includes a material or structure that is capable of responding to changes in the bending state. Exemplarily, the sensitive material includes a conductive carbon paste. In some embodiments, microstructures, such as micro-gaps, micro-holes, etc., are provided on a surface of the conductive carbon paste to amplify the sensitivity of the sensitive material.

In some embodiments, the bending sensor 210 is disposed at a middle part of the accommodation cavity of the connection member 120 (i.e., the bending sensor 210 is at the same or approximately the same distance from the two speaker assemblies 110), e.g., at position A shown in FIG. 1. In some embodiments, the bending sensor 210 is also disposed close to one of the two speaker assemblies 110, e.g., position B or position C as shown in FIG. 1.

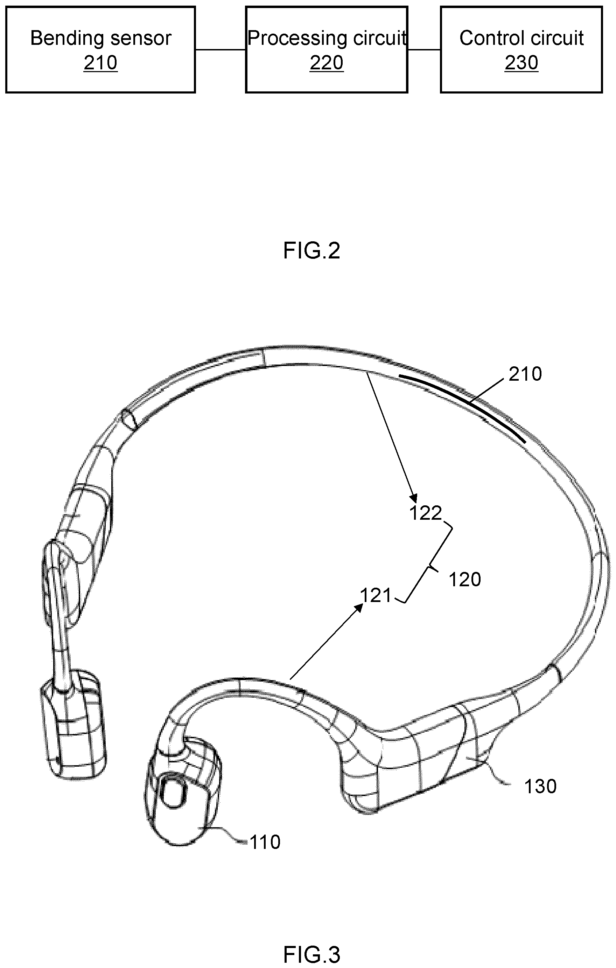

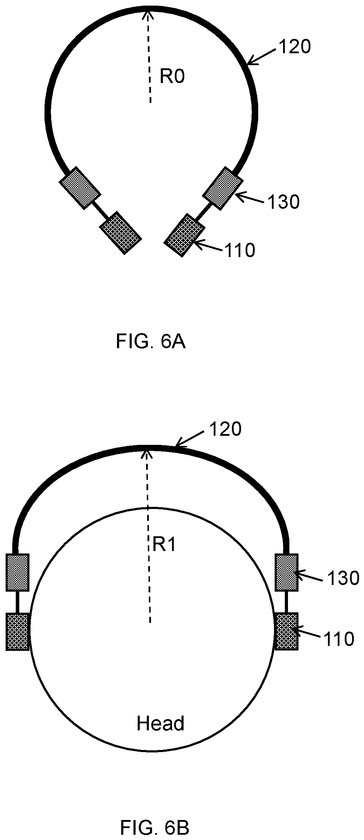

FIG. 2 is a schematic diagram illustrating a circuit module of an exemplary earphone according to some embodiments of the present disclosure. Referring to FIG. 2, in some embodiments, the earphone 100 include a processing circuit 220 and a control circuit 230. The processing circuit 220 is electrically connected to the bending sensor 210 and the control circuit 230. The processing circuit 220 determines a bending state of the connection member 120 based on a bending signal detected by the bending sensor 210. Specifically, the processing circuit 220 determines an equivalent curvature radius of the connection member 120 based on the bending signal detected by the bending sensor 210, thereby determining the bending state (or a bending degree) of the connection member 120. Exemplarily, in some embodiments, a mapping relationship between the bending signal and the equivalent curvature radius of the connection member 120 is preconfigured based on experimental data. The processing circuit 220 determines the equivalent curvature radius of the connection member 120 based on the bending signal detected by the bending sensor 210 and the mapping relationship, thereby determining the bending state (or the bending degree) of the connection member 120. It is appreciated that in the embodiments of the present disclosure, when the earphone 100 is a bone conduction earphone as shown in FIG. 3, due to a limitation of a shape of the rear hanging assembly 122 (e.g., the shape of a titanium filament), a measurement of the equivalent curvature radius is easier to achieve than a measurement of a stress alone, and a result of the measurement is more reliable. In addition, the equivalent curvature radius is able to establish a more stable mapping relationship between the equivalent curvature radius and a placement state of the bone conduction earphone, which is less susceptible to an interference of factors such as pressure and shaking, and thus allows for a more accurate wearing detection. Further, the processing circuit 220 determines the placement state of the earphone 100 based on the bending state of the connection member 120. In some embodiments, the placement state of the earphone 100 includes one of a normal wearing state, an abnormal wearing state, or a free placement state. **The** normal wearing state refers to a state of the earphone 100 when the earphone 100 is normally worn by a user for playing audio; the free placement state refers to a state of the earphone 100 when the earphone 100 is not worn by a user; and the abnormal wearing state refers to a state other than the normal wearing state and the free placement state, for example, a state of the earphone 100 when the user hangs the earphone 100 around neck. More descriptions of the determination of the placement state of the earphone 100 may be found elsewhere in the present disclosure, for example, in FIGs. 6A-6B, FIGs. 8A-8C, FIGs. 9A-9C, and descriptions thereof, which are not repeated herein. **The** control circuit 230 may adjust an operating state of one or more electronic assemblies (e.g., a Bluetooth module, a battery, etc.) of the earphone 100 based on a determination result of the processing circuit 220. Specifically, when the earphone 100 is in the normal wearing state, the control circuit 230 controls at least one of the one or more electronic assemblies to be in an awake state, and when the earphone 100 is in the abnormal wearing state or the free placement state, the control circuit 230 controls at least one of the one or more electronic assemblies to be in a low-power operating state or a disabled state. For example, when it is determined that the earphone 100 is in the normal wearing state, the control circuit 230 controls the earphone 100 to enter the awake state (i.e., connecting the battery to the circuit); conversely, when it is determined that the earphone 100 is in the abnormal wearing state or the free placement state, the control circuit 230 controls the earphone 100 to be in a standby state (i.e., disconnecting the battery from the circuit). As another example, when it is determined that the earphone 100 is in the normal wearing state, the control circuit 230 controls the Bluetooth module to turn on a Bluetooth function, and conversely, when it is determined that the earphone 100 is in the abnormal wearing state or the free placement state, the control circuit 230 controls the Bluetooth module to disable the Bluetooth function. For a further example, when it is determined that the earphone 100 is in the normal wearing state, the control circuit 230 controls the earphone 100 to automatically play music, and conversely, when it is determined that the earphone 100 is in the abnormal wearing state or the free placement state, the control circuit 230 controls the earphone 100 to stop playing the music.

In some embodiments, the earphone 100 includes a plurality (e.g., two or more) of bending sensors 210 (or the bending sensor 210 includes a plurality of sensitive units). The plurality of bending sensors 210 (or the plurality of sensitive units of the bending sensor 210) are disposed at different positions within an accommodation cavity of the connection member 120, and the processing circuit 220 jointly determines a current bending state of the connection member 120 based on the bending signals collected by the plurality of bending sensors 210, thereby improving an accuracy of identifying the placement state of the earphone 100. For example, the bending sensors 210 are disposed at position A, position B, and position C, respectively, as shown in FIG. 1. If the bending sensor 210 disposed at the position B detects the bending signal indicating that the equivalent curvature radius of the connection member 120 is greater than the equivalent curvature radius of the earphone 100 when the earphone 100 is freely placed, and the bending signals detected by the bending sensors 210 at the position A and the position C indicate that the equivalent curvature radius of the connection member 120 is equal to the equivalent curvature radius of the earphone 100 when the earphone is freely placed, it is indicated that a bending deformation occurs at the position B is generated due to an accidental touching. At this time, the processing circuit 220 determines that the earphone 100 is in the free placement state, and accordingly, the control circuit 230 controls the earphone 100 to be in the standby state.

In some embodiments, the processing circuit 220 determines a head circumference of the user based on the bending signal detected by the bending sensor 210, thereby determining forces between the speaker assemblies 110 and the head or an ear of the user. Further, the processing circuit 220 optimizes an acoustic output algorithm of the two speaker assemblies 110 based on the forces between the speaker assemblies 110 and the head or the ears of the user and adjusts the audio output signal, so that the user obtains the best sound effect and wearing experience. For example, the equivalent curvature radius of each connection member 120 corresponds to one head circumference. The processing circuit 220 determines the head circumference of the user based on the determined equivalent curvature radius of the connection member 120. A size of the head circumference reflects a magnitude of force between the speaker assemblies 110 and the head or the ears of the user. The greater the head circumference, the greater the force between the speaker assemblies 110 and the head or ears of the user. When the force between the speaker assemblies 110 and the head or the ear of the user is less than a certain value, a loss of low and medium frequency signals in the audio signals transmitted by the speaker assemblies 110 to the skin is relatively great. At this time, a balance can be performed by increasing an output gain of the low and medium frequency signals in the acoustic output algorithm of the speaker assemblies 110, so as to avoid a problem of a reduction of the low and medium frequency signals in the output signals of the speaker assemblies 110 due to a wearing problem, thereby improving the user experience.

It should be noted that in some embodiments of the present disclosure, the earphone 100 obtains the audio signals through a wired communication and/or a wireless communication. Referring to FIG. 1, for example, in some embodiments, the earphone 100 also includes cables as well as a connector. The connector is configured to connect other devices (e.g., cell phones, computers, etc.) to obtain audio data. The audio data is transmitted through the cables to the two speaker assemblies 110 for output, thereby converting electrical signals to acoustic signals. For another example, in some embodiments, the earphone 100 includes a wireless communication module (not shown in FIG. 1). The earphone 100 receives the audio data from other devices through the wireless communication module and output sound through the two speaker assemblies 110. An exemplary wireless communication module include a Bluetooth module, an infrared communication module, a WiFi module, a ZigBee module, etc.

FIG. 3 is a schematic diagram illustrating a structure of an exemplary earphone according to some other embodiments of the present disclosure.

Referring to FIG. 3, in some embodiments, the connection member 120 includes two ear hook assemblies 121 and a rear hanging assembly 122. The ear hook assemblies 121 cooperate with ears of a user to allow the earphone 100 to hang at the ears of the user. The rear hanging assembly 122 is placed behind a neck or the head of the user (e.g., when the user is wearing the earphone 100 normally, the rear hanging assembly 122 is placed at a back of the head of the user, and when the user is not using the earphone 100 (i.e., when the earphone 100 is in an abnormal wearing state), the user hangs the earphone 100 around the neck, at which point the rear hanging assembly 122 is placed at the back of the neck of the user). The ear hook assemblies 121 and the rear hanging assembly 122 cooperate to provide a clamping force that places the two speaker assemblies 110 at the head or the ears of the user, so that the earphone 100 can be stably hooked at the ears of the user and do not easily fall off. The two speaker assemblies 110 are connected to the rear hanging assembly 122 through two ear hook assemblies 121, respectively. In some embodiments, the bending sensor 210 is disposed within an accommodation cavity formed by the rear hanging assembly 122.

As the user changes a bending degree of the connection member 120 (e.g., the rear hanging assembly 122) when wearing the earphone, in some embodiments, to accurately detect a bending state of the connection member 120, so as to accurately determine a current placement state of the earphone 100 (e.g., a normal wearing state or an abnormal wearing state), the bending sensor 210 is disposed at a position where the change of the bending degree of the connection member 120 (e.g., the rear hanging assembly 122) is relatively great, e.g., the position where a symmetry plane of the rear hanging assembly 122 intersects with the rear hanging assembly 122, i.e., a middle portion of the rear hanging assembly 122. It should be noted that, in the embodiments of the present disclosure, the symmetry plane of the rear hanging assembly 122 refers to a symmetry plane with two ends of the rear hanging assembly 122 as symmetry points.

In some embodiments, to further ensure that the bending state of the connection member 120 is accurately detected and thereby accurately determining the current placement state (e.g., the normal wearing state or the abnormal wearing state) of the earphone 100, a sensitive direction of the bending sensor 210 is also made to be consistent with a direction of the bending deformation of the connection member 120 (e.g., the rear hanging assembly 122) during the wearing process. The direction of the bending deformation of the connection member 120 (e.g., the rear hanging assembly 122) refers to a direction in which a corresponding curvature radius of the connection member 120 (or the rear hanging assembly 122) changes the most during the wearing process. It is understood that by making the sensitivity direction of the bending sensor 210 consistent with the bending direction of the connection member 120 or the rear hanging assembly 122, the bending sensor 210 is made to have the best response to the change of the bending state of the connection member 120 or the rear hanging assembly 122, thereby ensuring a detection accuracy of the placement state of the earphone 100.

Referring to FIG. 3, in some embodiments, at least one of the two ear hook assemblies 121 include an earphone compartment 130. In some embodiments, the earphone compartment 130 is configured to organize or accommodate one or more components of the earphone 100 (e.g., the processing circuit 220, the control circuit 230, the Bluetooth module, the battery, etc.).

FIG. 4 is a schematic diagram illustrating a structure of a cross-section of a connection member of an exemplary earphone according to some embodiments of the present disclosure.

Referring to FIG. 4, in some embodiments, the connection member 120 includes a housing 123. The housing 123 forms an accommodation cavity 125. In some embodiments, a cable 124, the bending sensor 210, etc., are accommodated in the accommodation cavity 125. The cable 124 is configured to transmit audio signals, the bending signals detected by the bending sensor 210, and control signals for controlling operating states of assemblies such as the two speaker assemblies 110, a Bluetooth module, etc.

In some embodiments, the housing 123 is made of a rigid material with a certain hardness or stiffness that has a certain deformability and provides a clamping force required for a user to wear the earphone 100. In some embodiments, the rigid material includes a metal material or a non-metal material, such as an aluminum alloy, a nickel-titanium alloy, a plastic, etc. In some embodiments, an outer contour of the housing 123 is a regular shape such as a cylinder, an ellipsoid, a prism (e.g., a quadrilateral, a pentagonal, a hexagonal, etc.), or other irregular shapes.

Referring to FIG. 4, in some embodiments, to avoid the cable 124 and the bending sensor 210 from being shaken or collided by an external force within the accommodation cavity 125, which produces noise or has an effect on a detection result of the bending sensor 210, the cable 124 and the bending sensor 210 are fixed to an inner wall of the accommodation cavity 125 through manners such as bonding, snap-fitting, etc. In some embodiments, to further avoid the foregoing problems, after the accommodation cavity 125 is configured to accommodate the cable 124 and the bending sensor 210, a gap between the cable 124 and the bending sensor 210, or a gap between any of the cable 124 and the bending sensor 210 and the inner wall of the accommodation cavity 125 is filled using a filler, for example, the gap is filled with silicone, a sponge, etc.

FIG. 5A is a schematic diagram illustrating a structure of a cross-section of a connection member of an exemplary earphone according to other embodiments of the present disclosure. FIG. 5B is a schematic diagram illustrating a structure of a cross-section of a connection member of an exemplary earphone according to another embodiment of the present disclosure.

Referring to FIG. 5A and FIG. 5B, in some embodiments, considering that the housing 123 directly contacts a human skin in a wearing process, if the housing is too hard, it may cause discomfort in the portion of the human body contacting the housing 123. Therefore, in some embodiments, the housing 123 is made of a flexible material such as silicone and/or elastic resin, which is wrapped around an exterior of the cable 124 and the bending sensor 210. Meanwhile, to satisfy a support property as well as a clamping property of the connection member 120 during use, a skeleton structure 126 is disposed inside the housing 123 composed of the flexible material. The skeleton structure 126 has a degree of stiffness or rigidity, which provides a clamping force required by a user while wearing it through an ability to deform and recover. Exemplarily, in some embodiments, the skeleton structure 126 includes a metal structure such as a titanium wire, a titanium-nickel wire (sheet), etc.

Combining FIG. 5A and FIG. 5B, in some embodiments of the present disclosure, the cable 124, the skeleton structure 126, and the bending sensor 210 are arranged in an arbitrary manner within the housing 123. For example, as shown in FIG. 5A, the cable 124 and the bending sensor 210 are disposed at opposite positions of the skeleton structure 126. For another example, as shown in FIG. 5B, the cable 124 and the bending sensor 210 are disposed adjacent positions of the skeleton structure 126.

In some embodiments, the stiffness of the skeleton structure 126 in a bending direction of the rear hanging assembly 122 is greater than the stiffness of the bending sensor 210 in a bending direction of the rear hanging assembly 122, thereby allowing the skeleton structure 126 to provide the clamping force that secures the two speaker assemblies 110 to a head of the user through a bending deformation. In some embodiments, the stiffness of the bending sensor 210 in the bending direction of the rear hanging assembly 122 is great enough to provide the clamping force that secures the two speaker assemblies 110 to the head of the user through the bending deformation. In this case, the earphone 100 does not include the skeleton structure 126. Referring to FIG. 5A or 5B, in some embodiments, to further ensure that the bending sensor 210 accurately detects the change in the bending state of the connection member 120, the bending sensor 210 is fitted to the skeleton structure 126. It is to be appreciated that after the bending sensor 210 is fitted to a surface of the skeleton structure 126 (e.g., the titanium wire), the skeleton structure 126 is considered as a portion of the bending sensor, and the bending sensor 210 and the skeleton structure 126 together serve to detect the change in an equivalent curvature radius of the skeleton structure 126 (or the connection member 120). In some embodiments, a sensor for detecting the change in the equivalent curvature radius of the connection member 120 is a stress-strain sensor.

In some embodiments, when the housing 123 is made of the flexible material, an outer contour of the housing 123 is a regular shape such as a cylinder, an ellipsoid, a prism (e.g., a quadrangular, pentagonal, hexagonal, etc.), or other irregular shapes. In some embodiments, to avoid the cable 124 and the bending sensor 210 from being shaken or collided within the accommodation cavity 125 due to an external force, which produces a noise or has an effect on a detection result of the bending sensor 210, the cable 124 and the bending sensor 210 are fixed to the skeleton structure 126 in a manner such as bonding or snap-fitting. In some embodiments, the housing 123 is fixed outside the cable 124, the skeleton structure 126, and the bending sensor 210 by injection molding, so that the housing 123 wraps the cable 124, the skeleton structure 126 and the bending sensor 210. In some embodiments, there is a gap between any two of the cable 124, the skeleton structure 126, and the bending sensor 210, or between any one of the cable 124, the skeleton structure 126, or the bending sensor 210 and an inner wall of the housing 123. The gap is filled with a filler or filling material, for example, the gap is filled with silicone, sponge, etc. It should be noted that in some embodiments of the present disclosure, the filler or the filling material is of the same or different composition from the housing 123.

FIG. 6A is a schematic diagram illustrating an exemplary earphone in a free placement state according to some embodiments of the present disclosure. FIG. 6B is a schematic diagram illustrating an exemplary earphone in a normal wearing state according to some embodiments of the present disclosure.

Referring to FIGs. 6A and 6B, when the earphone 100 is in the free placement state (as shown in FIG. 6A), the connection member 120 shows a natural contraction bending state under a constraint of the skeleton structure 126 or a rigid shell 121, and an equivalent curvature radius of the connection member 120 is R0. When the earphone 100 is in a normal wearing state (as shown in FIG. 6B), as the user needs to wear the earphone 100 on the head or ears, at this time, due to an action of the head, the bending curvature of the connection member 120 changes, and the equivalent curvature radius increases to R1, i.e., R1>R0. Based on this, a current equivalent curvature radius of the connection member 120 is determined based on the bending signal generated by the bending sensor 210, and a current placement state of the earphone 100 is determined based on the equivalent curvature radius and a preset threshold. The preset threshold is greater than the equivalent curvature radius when the earphone 100 is in the free placement state. Specifically, when the bending signal detected by the bending sensor 210 indicates that the equivalent curvature radius of the connection member 120 is less than or equal to R0, the processing circuit 220 determines that the earphone 100 is in the free placement state. When the bending signal detected by the bending sensor 210 indicates that the equivalent curvature radius of the connection member 120 is greater than R0 but less than the preset threshold, the processing circuit 220 determines that the earphone 100 is in an abnormal wearing state, for example, the earphone 100 is placed on the neck of the user. When the bending signal detected by the bending sensor 210 indicates that the equivalent curvature radius of the connection member 120 is greater than R0 and is greater than or equal to the preset threshold, the processing circuit 220 determines that the earphone 100 is in the normal wearing state.

It is known that, in some embodiments, in addition to indicating a bending degree of the connection member 120 using the equivalent curvature radius, the bending degree of the connection member 120 is indicated using other parameters, so as to identify the current placement state of the earphone based on the corresponding indication parameters. For example, parameters such as a deflection, a rotation angle, etc., can be used to indicate the bending degree of the connection member 120.

In some embodiments, the preset threshold is determined by counting an actual wearing state of a great count of users. For example, the preset threshold corresponding to adult users is set greater relative to child users. In some embodiments, considering that a value of R1 corresponding to the normal wearing state of the earphone 100 vary from user to user, to more accurately identify the placement state of the earphone 100, the user can customize the preset threshold according to their wearing situation. For example, the earphone 100 is disposed with a preset threshold adjustment assembly (e.g., a preset threshold adjustment button, or a preset threshold adjustment box disposed in an APP connected to the earphone 100), and the user adjusts the preset threshold according to his or her wearing situation. In some embodiments, to further improve a sensitivity and an applicability of the earphone 100, an adaptive calibration algorithm is configured for the aforementioned preset threshold to automatically adjust the preset threshold. For example, a statistical analysis is performed based on experimental data to determine an initial value of the preset threshold. The user performs a wearing confirmation when the earphone 100 is in a normal wearing state, e.g., through a button or a touch key, etc. The processing circuit 220 adjusts the preset threshold based on the equivalent curvature radius of the earphone 100 when the user performs the wearing confirmation. Specifically, for example, the processing circuit 220 adjusts the preset threshold (e.g., the initial value or a last updated preset threshold) to a value equal to the equivalent curvature radius of the earphone 100 when the user performs the wearing confirmation. In some embodiments, the processing circuit 220 also calibrates the preset threshold based on the bending signals generated by the bending sensor 210 during the normal wearing by the user over a plurality of times or over a period of time. For example, the processing circuit 220 determines a candidate threshold based on the bending signal generated by the bending sensor 210 each time when the earphone is normally worn. The processing circuit 220 adjusts the preset threshold (e.g., the initial value or the last updated preset threshold) to be equal to an average of the respective candidate thresholds. Through the adaptive calibration algorithm, the corresponding preset threshold is automatically adjusted when the user of the earphone 100 changes, so as to improve an intelligence and an adaptability of the earphone 100, and improve use experience of the user to a certain extent. An exemplary adaptive calibration algorithm includes a least mean square (LMS), a recursive least square (RLS), a forced zero, a steepest descent, a blind equalization, etc. In some embodiments, the adaptive calibration algorithm is another algorithm, which is not limited in the present disclosure.

In some embodiments, the earphone 100 also includes one or more indicator lights for indicating a current operating state or wearing state of the earphone 100. For example, the earphone 100 includes red and green indicator lights. The lighting of the green indicator light indicates that the earphone 100 is currently in an abnormal wearing state or a free placement state, whose operating mode is in a standby state; correspondingly, the lighting of the red indicator light indicates that the earphone 100 is currently in a normal wearing state whose operating mode is in an awake state. It should be noted that the above colors of the indicator lights are only examples, and in some other embodiments, the indicator lights adopt other colors or the same indicator light indicates a different state of the earphone 100 by displaying different colors.

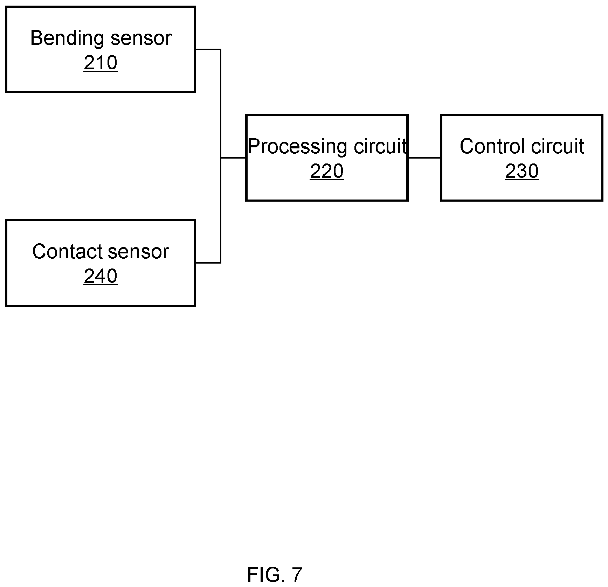

FIG. 7 is a schematic diagram illustrating a circuit module of an exemplary earphone according to other embodiments of the present disclosure.

In some embodiments, the earphone 100 also includes a contact sensor 240. The contact sensor 240 is disposed within a shell of the at least one speaker assembly 110 or within the earphone compartment 130 as shown in FIG. 3. The contact sensor 240 is configured to identify whether the earphone compartment 130 is close to or in contact with a user (e.g., in contact with skin of the user). In some embodiments, the earphone 100 includes left and right earphone compartments 130. To improve an accuracy of wearing detection, the contact sensor 240 is disposed in each of the left and right earphone compartments 130. Through contact signals detected by the two contact sensors 240 whether the earphone compartment 130 is close to or contacts with the user is determined jointly. For example, only if the left and right contact sensors 240 detect that the earphone compartment 130 is close to or contacts with the user, the processing circuit 220 determines that the earphone compartment 130 is close to or contacts with the user. In some embodiments, the contact sensor 240 includes one or more of a capacitive proximity sensor, a pressure sensor (e.g., a film pressure sensor), an infrared sensor, a laser sensor, etc. It is appreciated that different types of contact sensors adopt different operating principles, and parameters for determining whether the corresponding component is in contact with the user are different. For example, for a pressure sensor, when the detected pressure is greater than a pressure threshold, it is determined that the corresponding component is in contact with the user, whereas when the detected pressure is less than the pressure threshold, it is determined that the corresponding component does not contact the user. For another example, for the infrared sensor, when a detected distance is greater than a distance threshold, it is determined that the corresponding component is in contact with the user; and when the detected distance is less than the distance threshold, it is determined that the corresponding component is not in contact with the user.

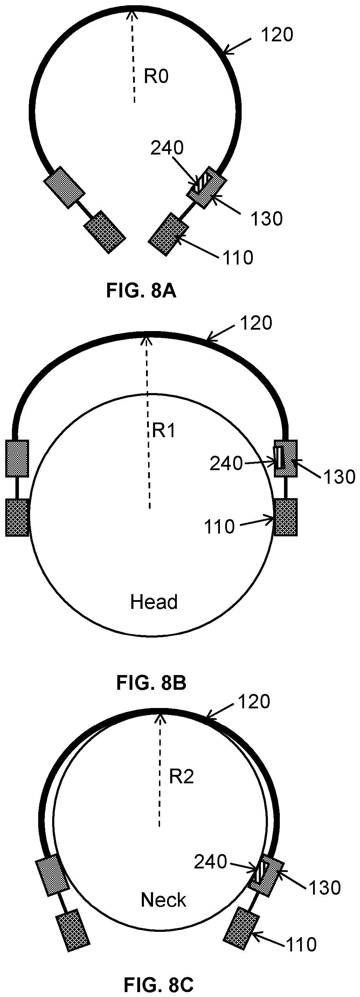

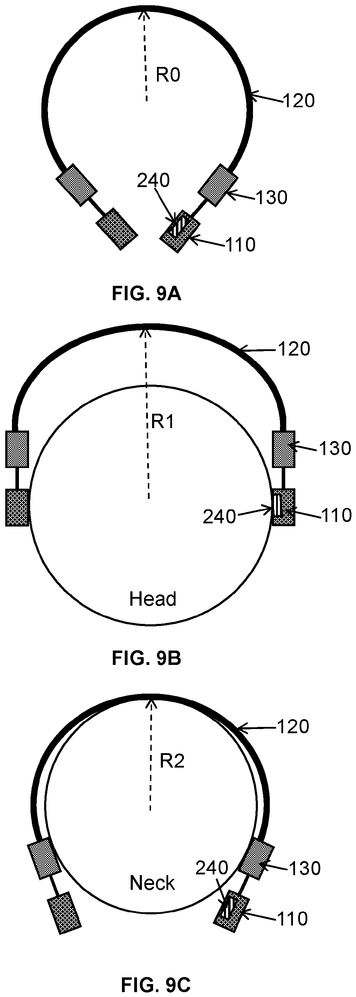

The processing circuit 220 determines a current placement state of the earphone 100 based on the bending signal collected by the bending sensor 210 and the contact signal collected by the contact sensor 240. More information on combining the bending signal of the bending sensor and the contact signal of the contact sensor 240 for determining the placement state of the earphone 100 may be found in FIGs. 8 A-8C and FIGs. 9A-9C of the present disclosure, which are not repeated here.

In some embodiments, to reduce a power consumption of the earphone 100 and/or the contact sensor 240, the contact sensor 240 is set to be in a sleep state by default, and when the bending signal collected by the bending sensor 210 indicates that the connection member 120 has an equivalent curvature radius greater than or equal to a preset threshold, the processing circuit 220 controls the contact sensor 240 to collect the contact signal. In some embodiments, to reduce a power consumption of the earphone 100 and/or the contact sensor 240, the processing circuit 220 is set to receive the contact signal of the contact sensor 240 for processing only when the bending signal collected by the bending sensor 210 indicates that the equivalent curvature radius of the connection member 120 is greater than or equal to the preset threshold. The preset threshold is greater than the equivalent curvature radius of the earphone 100 when freely placed.

In some embodiments, the earphone 100 does not include the connection member 120. At this time, the earphone 100 is one or more of an open earphone, smart glasses, a single-ear earphone, a single-ear in-ear earphone (e.g., a true wireless Bluetooth earphone), etc. In this case, the earphone 100 does not include the bending sensor 210, but instead include at least two other types of sensors (e.g., two contact sensors). The processing circuit 220 collaboratively determines whether the earphone 100 is in a normal wearing state based on signals detected by at least two other types of sensors. Merely by way of example, the earphone 100 includes a first contact sensor and a second contact sensor. Types of the first contact sensor and the second contact sensor are the same or different. For example, the first contact sensor is an infrared sensor, and the second contact sensor is a film pressure sensor. In some embodiments, the first contact sensor and the second contact sensor are disposed at any suitable position of the earphone 100. For example, the first contact sensor and the second contact sensor may be disposed in the shell of the same speaker assembly 110 or in two separate shells of the two speaker assemblies 110. For another example, for the smart glasses, the first contact sensor and the second contact sensor may be disposed in one lens leg at the same time or in two lens legs separately. For another example, for the smart glasses, the first contact sensor is disposed in the lens leg and the second contact sensor is disposed in a nosepiece. The processing circuit 220 determines whether the earphone 100 is in the normal wearing state directly based on the contact signals collected by the first contact sensor and the second contact sensor. For example, the processing circuit 220 determines that the earphone 100 is in the normal wearing state only when the first contact sensor and the second contact sensor simultaneously detect that the user is approaching or contacting.

In some embodiments, the earphone 100 includes a contact sensor and an orientation sensor (e.g., a gyroscope). For example, corresponding to a single-ear earphone, the contact sensor is disposed at a position close to a top of the ear in the normal wearing state. The processing circuit 220 determines that the earphone 100 is in the normal wearing state only when the contact sensor detects that the user is approaching or contacting, and the orientation sensor indicates that the earphone is placed vertically.

FIG. 8A is a schematic diagram illustrating an exemplary earphone in a free placement state according to some embodiments of the present disclosure. FIG. 8B is a schematic diagram illustrating an exemplary earphone in a normal wearing state according to some embodiments of the present disclosure. FIG. 8C is a schematic diagram illustrating an exemplary earphone in an abnormal wearing state according to some embodiments of the present disclosure.

In some embodiments, referring to FIGs. 8A-8C, the contact sensor 240 is disposed on an inner side of the earphone compartment 130 (i.e., a side of the earphone 100 that is close to a human skin when the earphone 100 is in the normal wearing state). When the earphone 100 is in a free placement state (as shown in FIG. 8A), an equivalent curvature radius of the connection member 120 is R0. When the earphone 100 is in the normal wearing state (as shown in FIG. 8B), due to the support of the head, the equivalent curvature radius of the connection member 120 increases to R1, i.e., R1>R0. At this time, the earphone compartment 130 is not in contact with the head of the user. When the earphone 100 is in the abnormal wearing state (e.g., the user hangs the earphone 100 around a neck), as shown in FIG. 8C, due to a support of the neck, the equivalent curvature radius of the connection member 120 increases to R2, i.e., R2>R0. As a neck size is smaller than a head size, R1>R2>R0. At this time, the earphone compartment 130 is in contact with (or close to) the neck of the user. Based on this, in some embodiments, the current placement state of the earphone 100 may be jointly determined based on the current equivalent curvature radius of the connection member 120 determined based on the bending signal generated by the bending sensor 210 and the contact state between the earphone compartment 130 and the user detected by the contact sensor 240.

Merely by way of example, when the bending signal detected by the bending sensor 210 is a first bending signal indicating that the equivalent curvature radius of the connection member 120 (or the rear hanging assembly 122) is greater than or equal to the preset threshold, an output of the bending sensor 210 is 1 (i.e., the output is a high level). On the contrary, when the bending signal detected by the bending sensor 210 is a second bending signal indicating that the equivalent curvature radius of the connection member 120 is less than the preset threshold, the output of the bending sensor 210 is 0 (i.e., the output is a low level). Similarly, when the contact signal detected by the contact sensor 240 is a first contact signal indicating that the earphone compartment 130 is not in contact with the user (or that a distance from the user is greater than the preset distance threshold), an output of the contact sensor 240 is 1 (i.e., the output is a high level). On the contrary, when the contact signal detected by the contact sensor 240 is a second contact signal indicating that the earphone compartment 130 is in contact with the user (or that the distance from the user is less than the preset distance threshold), the output of the contact sensor 240 is 0 (i.e., the output is a low level).

It is noted that in some embodiments of the present disclosure, when the earphone 100 includes a plurality of bending sensors 210 disposed at different positions, a total bending signal is determined based on the bending signals detected by the plurality of bending sensors 210 together. For example, when the bending signals detected by the bending sensors 210 at the position A, the position B, and the position C as shown in FIG. 1 all indicate that the equivalent curvature radius of the connection member 120 (or the rear hanging assembly 122) is greater than or equal to the preset threshold, the total bending signal output by the plurality of bending sensors 210 are determined to be the first bending signal (i.e., the value of which is 1). As another example, when the bending signal detected by the bending sensor 210 at position B indicates that the equivalent curvature radius of the connection member 120 (or the rear hanging assembly 122) is greater than or equal to the preset threshold, while the bending signal detected by the bending sensors 210 at positions A and C indicate that the equivalent curvature radius of the connection member 120 (or the rear hanging assembly 122) is equal to the equivalent curvature radius of the earphone 100 when the earphone 100 is freely placed, it indicates that a bending deformation occurs at the position B is generated due to a mistaken touching. At this time, the total bending signal of the plurality of bending sensors 210 is determined to be the second bending signal (i.e., whose value is 0).

Further, the processing circuit 220 determines whether the earphone 100 is in the normal wearing state based on the output of the bending sensor 210 and the output of the contact sensor 240, and thereby issue an instruction to the control circuit 230 based on whether the earphone 100 is in the normal wearing state. The control circuit 230 controls an operating state of the earphone 100 based on the received control instruction. In some embodiments, referring to Table 1, the output of the processing circuit 220 is 1 only when the bending signal is the first bending signal (i.e., the value of which is 1) and the contact signal is the first contact signal (i.e., the value of which is 1), i.e., it indicates that the earphone 100 is determined to be in the normal wearing state. When the output of either of the bending sensor 210 and the contact sensor 240 is 0, the output of the processing circuit 220 is 0, which indicates that the earphone 100 is determined to be in the abnormal wearing state or the free placement state. Further, the control circuit 230 controls the operating state of one or more components of the earphone 100 based on the output of the processing circuit 220. For example, when the total output of the processing circuit 220 is 1, the control circuit 230 controls the earphone 100 to enter an awake state; when the total output of the processing circuit 220 is 0, the control circuit 230 controls the earphone 100 to remain in a standby state.

**Table 1 Scheme for detecting the earphone placement state when the contact sensor is placed inside the earphone compartment**

| Bending sensors | Contact Sensors | total output |
|---|---|---|
| 1 | 1 | 1 |
| 1 | 0 | 0 |
| 0 | 1 | 0 |
| 0 | 0 | 0 |

It should be noted that the output signals shown in Table 1 are only exemplary illustrations, and in some embodiments, other manners are used to express the bending signal detected by the bending sensor 210, the contact signal detected by the contact sensors 240, and the total output signal of the earphone 100. For example, in some embodiments, when the contact signal detected by the contact sensor 240 is the aforementioned first contact signal, its output may be represented by 0 (i.e., the output is the low level), and conversely, when the contact signal detected by the contact sensor 240 is the aforementioned second contact signal, its output may be represented by 1 (i.e., the output is the high level).

FIG. 9A is a schematic diagram illustrating an exemplary earphone in a free placement state according to some embodiments of the present disclosure. FIG. 9B is a schematic diagram illustrating an exemplary earphone in a normal wearing state according to some embodiments of the present disclosure. FIG. 9C is a schematic diagram illustrating an exemplary earphone in an abnormal wearing state according to some embodiments of the present disclosure.

In some embodiments, referring to FIGs. 9A-9C, the contact sensor 240 is disposed inside the shell of the at least one speaker assembly 110 (e.g., a side of the earphone 100 that is near a human skin when the earphone 100 is in the normal wearing state) for identifying whether the speaker assembly 110 is in contact with (or close to) a user. Unlike FIGs. 8A-8C, an output of the contact sensor 240 is 1 (i.e., the output is a high level) when a contact signal detected by the contact sensor 240 is a first contact signal indicating that the speaker assembly 110 is not in contact with the user (or the distance from the user is greater than a preset distance threshold), and conversely, when the contact signal detected by the contact sensor 240 is a second contact signal indicating that the speaker assembly 110 is in contact with the user (or the distance from the user is less than the preset distance threshold), the output of the contact sensor 240 is 0 (i.e., the output is a low level).

In some embodiments, referring to Table 2, when the contact sensor 240 is disposed inside the shell of the speaker assembly 110, only when the bending signal detected by the bending sensor 210 is the aforementioned first bending signal (i.e., the value of which is 1) and the signal detected by the contact sensor 240 is the second contact signal (i.e., the value of which is 0), the output of the processing circuit 220 is 1, i.e., it is determined that the earphone 100 is in the normal wearing state. When the bending signal detected by the bending sensor 210 is the aforementioned second bending signal (i.e., the value of which is 0) and/or the signal detected by the contact sensor 240 is the first contact signal (i.e., the value of which is 1) indicating that the speaker assembly 110 is not in contact with the user (or the distance from the user greater than the preset distance threshold), the output of the processing circuit 220 is 0, i.e., it is determined that the earphone 100 is in the abnormal wearing state or the free placement state. Further, the control circuit 230 controls the operating state of one or more components of the earphone 100 based on the output of the processing circuit 220. For example, when the total output of the processing circuit 220 is 1, the control circuit 230 controls the earphone 100 to enter an awake state; when the total output of the processing circuit 220 is 0, the control circuit 230 controls the earphone 100 to remain in a standby state.

**Table 2 Scheme for detecting the placement state of the earphone when the contact sensor is placed inside the shell of the speaker assembly**

| Bending sensors | Contact Sensors | total output |
|---|---|---|
| 1 | 0 | 1 |
| 1 | 1 | 0 |
| 0 | 1 | 0 |
| 0 | 0 | 0 |

Similarly, it is noted that the output signals shown in Table 2 are also only exemplary illustrations, and in some embodiments, other manners are similarly employed to express the bending signal detected by the bending sensor 210, the contact signal detected by the contact sensor 240, and the total output signal of the earphone 100. For example, in some embodiments, when the contact signal detected by the contact sensor 240 is the aforementioned first contact signal, the output of the contact sensor 240 may also be expressed by 0 (i.e., the output is the low level), and when the contact signal detected by the contact sensor 240 is the aforementioned second contact signal, the output of the contact sensor 240 may also be expressed by 1 (i.e., the output is the high level).

Beneficial effects brought about by the embodiments of the present disclosure include, but are not limited to:(1) by detecting the bending state of the connection member between the speaker assemblies through the bending sensor, and then analyzing the current use state of the earphone, an accurate identification of the wearing state of the earphone and an accurate control of a working state of the earphone is implemented; and (2) by determining the current wearing state of the earphone through the contact sensor and the bending sensor together, an accuracy of the earphone wearing state identification and an accuracy of the operating state control of the earphone is further improved. It is noted that the beneficial effects generated by different embodiments are different, and the beneficial effects generated in different embodiments are any one or a combination of any of the foregoing, or any other beneficial effect that is obtained.

The basic concepts are described above, and it is apparent to those skilled in the art that the foregoing detailed disclosure serves only as an example and does not constitute a limitation of the present disclosure. While not expressly stated herein, those skilled in the art make various modifications, improvements, and amendments to the present disclosure. These modifications, improvements, and amendments are suggested in the present disclosure, so these modifications, improvements, and amendments remain within the spirit and scope of the exemplary embodiments of the present disclosure.

## Claims

1. An earphone comprising:
two speaker assemblies;
a connection member configured to connect the two speaker assemblies, wherein the connection member provides, through a bending deformation, a clamping force for placing the two speaker assemblies on a head of a user, and the connection member includes a housing with an accommodation cavity, wherein
a bending sensor is disposed in the accommodation cavity, and the bending sensor is configured to generate a bending signal based on a bending state of the connection member; and
a processing circuit configured to determine a placement state of the earphone based on the bending signal, wherein the placement state includes one of a normal wearing state, an abnormal wearing state, or a free placement state.

2. The earphone of claim 1, wherein the connection member includes two ear hook assemblies and a rear hanging assembly, the two speaker assemblies are connected to the rear hanging assembly through the two ear hook assemblies, respectively, and the bending sensor is disposed in the accommodation cavity formed by the rear hanging assembly.

3. The earphone of claim 2, wherein a sensitivity direction of the bending sensor is the same as a bending direction of the rear hanging assembly.

4. The earphone of claim 2 or 3, wherein the bending sensor is disposed at a position where a symmetrical surface of the rear hanging assembly intersects the rear hanging assembly.

5. The earphone of any one of claims 2 to 4, wherein the rear hanging assembly further includes a skeleton structure, wherein
the bending sensor is fitted to the skeleton structure, and a stiffness of the skeleton structure is greater than a stiffness of the bending sensor in the bending direction of the rear hanging assembly.

6. The earphone of any one of claims 2-5, wherein the bending signal reflects an equivalent curvature radius of the rear hanging assembly.

7. The earphone of claim 6, wherein
when the bending signal indicates that the equivalent curvature radius of the rear hanging assembly is greater than an equivalent curvature radius of the earphone when the earphone is freely placed and is less than a preset threshold, the processing circuit determines that the earphone is in the abnormal wearing state; or
when the bending signal indicates that the equivalent curvature radius of the rear hanging assembly is greater than the equivalent curvature radius of the earphone when the earphone is freely placed and is greater than the preset threshold, the processing circuit determines that the earphone is in the normal wearing state.

8. The earphone of claim 7, wherein the earphone further includes:
a threshold adjustment assembly configured to adjust the preset threshold.

9. The earphone of claim 8, wherein the threshold adjustment assembly is further configured to receive a confirmation instruction from a user when the earphone is worn normally, and the processing circuit is further configured to:
determine, based on the confirmation instruction, a target equivalent curvature radius of the earphone when the user is wearing the earphone in in the normal state; and
adjusting the preset threshold based on an adaptive calibration algorithm and the target equivalent curvature radius.

10. The earphone of claim 6, wherein at least one of the two ear hook assemblies includes an earphone compartment, and the earphone further includes:
a contact sensor disposed within the earphone compartment and configured to identify whether the earphone compartment is in contact with the user, and
the processing circuit is further configured to determine the placement state of the earphone based on the bending signal of the bending sensor and a contact signal of the contact sensor.

11. The earphone of claim 10, wherein the earphone includes one or more electronic assemblies, wherein the processing circuit is further configured to adjust an operating state of the one or more electronic assemblies according to the placement state of the earphone, including:
controlling the one or more electronic assemblies to be in an awake state when the earphone is in the normal wearing state; and
controlling the one or more electronic assemblies to be in a low-power operating state when the earphone is in the abnormal wearing state or in the free placement state.

12. The earphone of claim 10, wherein when the bending signal is a first bending signal and the contact signal is a first contact signal, the processing circuit determines that the earphone is in the normal wearing state, wherein
the first bending signal indicates that the equivalent curvature radius of the rear hanging assembly is greater than a preset threshold, the preset threshold being greater than an equivalent curvature radius of the earphone when the earphone is freely placed, and
the first contact signal indicates that the earphone compartment is not in contact with the user.

13. The earphone of claim 10, wherein when the bending signal is a first bending signal and the contact signal is a second contact signal, the processing circuit determines that the earphone is in the abnormal wearing state, wherein
the first bending signal indicates that an equivalent curvature radius of the connection member is greater than a preset threshold, the preset threshold being greater than an equivalent curvature radius of the earphone when the earphone is freely placed, and
the second contact signal indicates that the earphone compartment is in contact with the user.

14. The earphone of claim 6, wherein the earphone further includes:
a contact sensor disposed within a shell of at least one speaker assembly of the two speaker assemblies and configured to identify whether the at least one speaker assembly is in contact with the user.

15. The earphone of claim 14, wherein when the bending signal is a first bending signal and a contact signal of the contact sensor is a second contact signal, the processing circuit determines that the earphone is in the normal wearing state, wherein
the first bending signal indicates that an equivalent curvature radius of the connection member is greater than a preset threshold, the preset threshold being greater than an equivalent curvature radius of the earphone when the earphone is freely placed, and
the second contact signal indicates that the at least one speaker assembly is in contact with the user.

16. the earphone of claim 14, wherein when the bending signal is a first bending signal and the contact signal is a first contact signal, the processing circuit determines that the earphone is in the abnormal wearing state, wherein
the first bending signal indicates that an equivalent curvature radius of the connection member is greater than a preset threshold, the preset threshold being greater than an equivalent curvature radius of the earphone when the earphone is freely placed, and
the first contact signal indicates that the at least one speaker assembly is not in contact with the user.

17. The earphone of any one of claims 10 to 16, wherein the contact sensor includes at least one of a capacitive proximity sensor, a film pressure sensor, and an infrared sensor.

18. The earphone of any one of claims 6 to 17, wherein, to determine the equivalent curvature radius of the rear hanging assembly, the processing circuit is further configured to:
generate a mapping relationship between the bending signal and the equivalent curvature radius of the rear hanging assembly based on test data under different wearing scenarios; and
determine the equivalent curvature radius of the rear hanging assembly based on the bending signal and the mapping relationship.
